# EUROPEAN PATENT SPECIFICATION

(11) **EP 3 192 416 B1**
(45) Date of publication and mention of the grant of the patent: **22.04.2020**
(21) Application number: 16207215.1
(22) Date of filing: 29.12.2016
(51) Int. Cl.: A47J 43/07

(54) **ROTARY COOKING DEVICE**
DREHKOCHVORRICHTUNG
DISPOSITIF DE CUISSON ROTATIF

(30) Priority: 12.01.2016 JP 2016003284
(43) Date of publication of application: 19.07.2017
(73) Proprietor: Panasonic Intellectual Property Management Co., Ltd., Osaka-shi, Osaka 540-6207 (JP)
(72) Inventor: SHIRAI, Takahiko, Osaka-shi, Osaka 540-6207 (JP); NOMURA, Hidefumi, Osaka-shi, Osaka 540-6207 (JP); NAGAMI, Hiroaki, Osaka-shi, Osaka 540-6207 (JP)
(74) Representative: Grünecker Patent- und Rechtsanwälte PartG mbB

(56) References cited:
- EP-A1- 2 005 867
- EP-A1- 2 561 781
- US-A1- 2006 284 043
- US-A1- 2014 346 262
- US-B1- 6 439 760

## Description

### 1. Technical Field

The present disclosure relates to a stationary rotary cooking device in which a rotor is rotated inside of a cooking container to perform cooking operations such as stirring, kneading, cutting, or slicing food to be cooked, which is contained inside of the cooking container.

### 2. Description of the Related Art

Unexamined Japanese Patent Publication Nos. 2015-119867, 2015-058069, and 2013-022286, for example, disclose a conventional rotary cooking device such as a food processor, a home baker, or a blender (i.e., a mixer).

When a rotor is rotated inside of a cooking container, the rotary cooking device is horizontally vibrated by the centrifugal force of a rotor. This vibration may cause, for example, the positional shift of the rotary cooking device, a large noise, and a drop of the rotary cooking device from a cooking table. In order to avoid such drawbacks, a rotary cooking device having a plurality of legs including suckers made of rubber has been proposed.

The rotary cooking device is provided with four legs for supporting a device body. Each of the four legs has a sucker made of rubber. In this manner, the rotary cooking device is fixed to a cooking table by the suction force of the sucker.

However, the suction force of the sucker inhibits the rotary cooking device from being easily lifted and moved.

Multiple functions have been required for a rotary cooking device in recent years, and therefore, its weight tends to be increased. Since a sucker generates suction force owing to the weight of the rotary cooking device itself, the suction force of the sucker becomes greater as the weight is increased. As a consequence, it is further difficult to lift the rotary cooking device.

In general, there has been known a method for weakening the suction force of the sucker by, for example, lifting a part of the outer periphery of the sucker so as to take air into the sucker.

However, it is not easy to lift a part of the outer periphery of each of the suckers by one action so as to weaken the suction force in the rotary cooking device provided with the four legs. In particular, in the case where the distance between the adjacent legs is long, hand fingers may not reach a part of the outer periphery of each of the suckers. Therefore, it may not be possible to weaken the suction force of each of the suckers simultaneously. Further prior art is known from document US6439760 B1 which discloses a cooking machine comprising a single suction cup 46. There is also a lever 47 for releasing the suction cup.
Document EP 2005 867 A1 discloses a cooking machine with a vacuum pad 11 connected to a vacuum pump. There is also a lever 96 for releasing the valve 12.
Document US 2006/284043 A1 discloses a suction device 2 used for securing kitchenware to a table top or the like. The subject cup has an integrated handle 62 for activating/deactivating the suction cup 60.

### SUMMARY

The present disclosure provides a rotary cooking device which can be easily lifted and moved and whose legs include suckers.

Specifically, a rotary cooking device according to the present disclosure includes: a device body; a cooking container that is fixed to the device body and is configured to contain food to be cooked; a rotor that is rotated inside of the cooking container and cooks the food to be cooked, which is contained inside of the cooking container; and a drive source that applies drive force to the rotor. Moreover, the rotary cooking device includes: a plurality of suckers that are attached to a bottom of the device body and serve as legs for supporting the device body by suction; and a suction releasing lever connects the plurality of suckers to each other. The suction releasing lever uplifts and moves a part of each of the plurality of suckers so as to release the suction of each of the plurality of suckers.

With this configuration, the rotary cooking device can be easily lifted and moved even in the case of the rotary cooking device in which each of the plurality of legs includes the sucker.

### BRIEF DESCRIPTION OF THE DRAWINGS

FIG. 1 is a perspective view showing a rotary cooking device according to an exemplary embodiment of the present disclosure;
FIG. 2 is a cross-sectional view showing the rotary cooking device of FIG. 1;
FIG. 3 is a perspective view showing a container unit for the rotary cooking device of FIG. 1, as viewed partly in perspective;
FIG. 4 is a cross-sectional view showing the schematic configuration of a rotor to be fixed to the container unit of FIG. 3;
FIG. 5 is a perspective view showing the rotor of FIG. 4 fixed to the container unit of FIG. 3, as viewed partly in perspective;
FIG. 6 is a cross-sectional view showing a device body of the rotary cooking device of FIG. 1;
FIG. 7 is a perspective view showing a bottom plate constituting the bottom of the device body of the rotary cooking device of FIG. 1, as obliquely viewed from the bottom;
FIG. 8 is a perspective view showing essential parts of the bottom plate of FIG. 7, as obliquely viewed from the top;
FIG. 9 is a cross-sectional view showing essential parts in a state in which a suction releasing lever is fixed;
FIG. 10 is a cross-sectional view showing essential parts in a state in which the suction releasing lever of FIG. 9 is lifted; and
FIG. 11 is a cross-sectional view showing essential parts in a modification of the configuration of a suction releasing lever for releasing the suction of a sucker.

### DETAILED DESCRIPTION

An exemplary embodiment of the present disclosure will be explained with reference to the attached drawings. Here, the present disclosure is not limited to the exemplary embodiment. Moreover, although a rotary cooking device is exemplified below by a stationary food processor, it is to be understood that the rotary cooking device should not be limited to this.

### (Exemplary Embodiment)

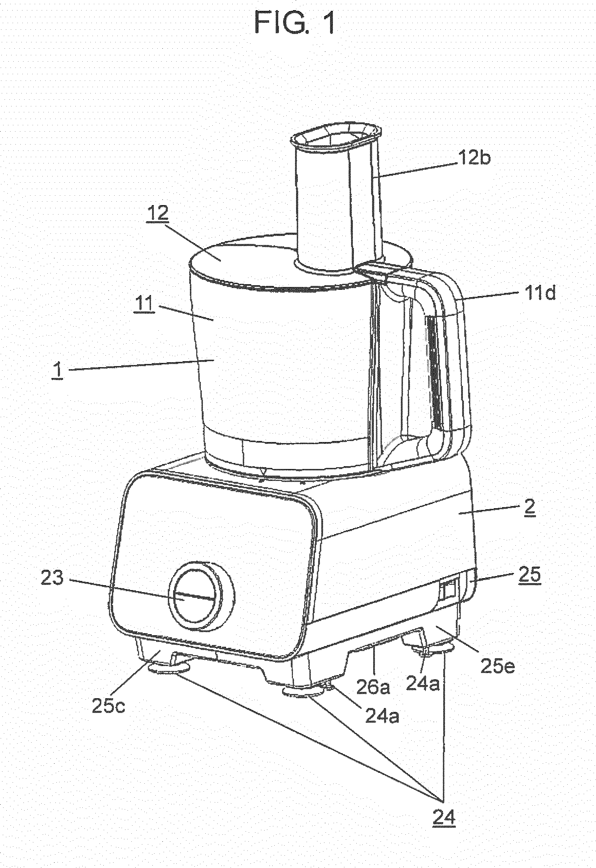

A rotary cooking device according to an exemplary embodiment of the present disclosure will be described with reference to FIG. 1 to FIG. 3.

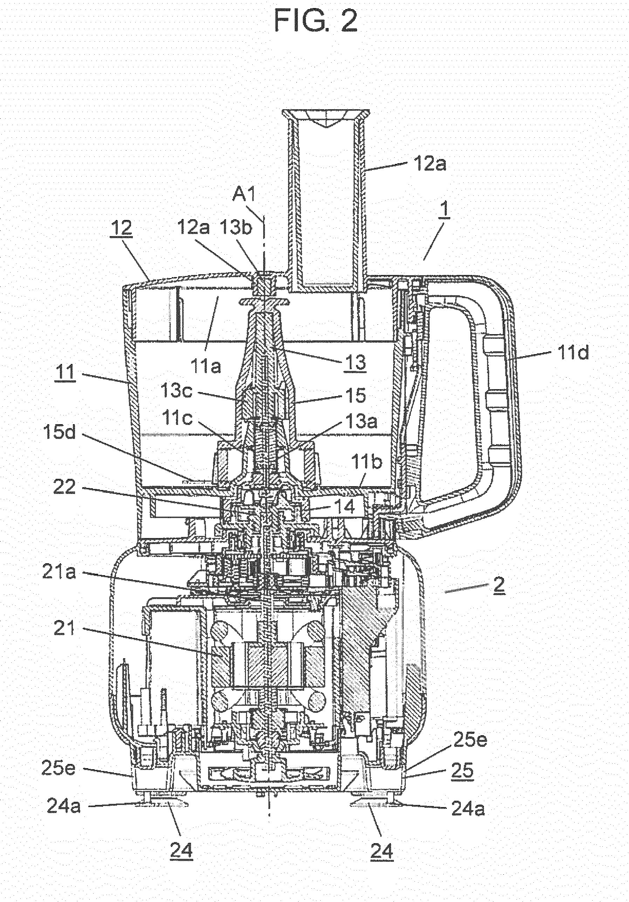

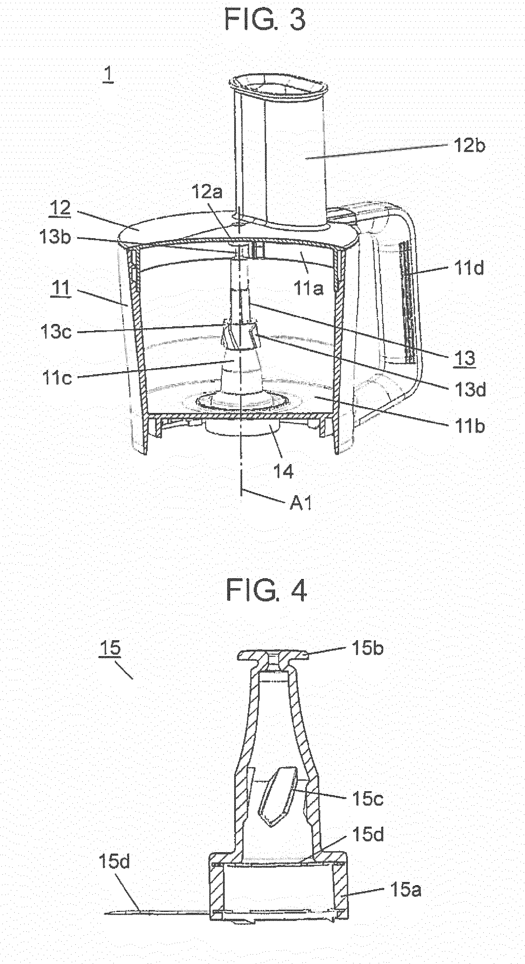

FIG. 1 is a perspective view showing a rotary cooking device according to the present exemplary embodiment; FIG. 2 is a cross-sectional view showing the rotary cooking device of FIG. 1; and FIG. 3 is a perspective view showing a container unit for the rotary cooking device of FIG. 1, as viewed partly in perspective.

As shown in FIG. 1, a rotary cooking device according to the present exemplary embodiment includes container unit 1, device body 2 to which container unit 1 is fixed, and the like.

Container unit 1 includes cooking container 11, lid 12, and the like. Cooking container 11 is formed into a substantially bottomed cylinder (including a bottomed cylinder) including upper opening 11a, bottom wall 11b, and the like, and then, is adapted to contain food to be cooked. Lid 12 is placed at upper opening 11a of cooking container 11 such that upper opening 11a is freely openable and closeable. In other words, cooking container 11 forms a container that is detachably attached to device body 2.

As shown in FIG. 2 and FIG. 3, cooking container 11 is provided, on the side of upper opening 11a, with cylindrical part 11c projecting from the center of bottom wall 11b. Rotary shaft 13 that is rotatable is disposed inside of cylindrical part 11c.

Rotary shaft 13 includes upper end 13b, lower end 13a, and large-diameter portion 13c. Rotary shaft 13 penetrates the inside of cylindrical part 11c and extends toward upper opening 11a of cooking container 11. Lower end 13a of rotary shaft 13 is secured to driven connector 14. Upper end 13b of rotary shaft 13 is pivotally supported by bearing 12a disposed at the center of the inner surface of lid 12 when lid 12 is closed. Driven connector 14 and bearing 12a support both ends of rotary shaft 13 such that rotational axis A1 is not deviated (is not eccentric).

Large-diameter portion 13c of rotary shaft 13 is an intermediate portion between lower end 13a and upper end 13b, and is disposed at a position above cylindrical part 11c of cooking container 11. Large-diameter portion 13c is formed so as to have a greater diameter than those of lower end 13a and upper end 13b. This facilitates other attachments.

Moreover, as shown in FIG. 3, large-diameter portion 13c of rotary shaft 13 has a plurality of claws 13d that project outward from an outer peripheral surface and are formed at equal intervals. Rotor 15 formed into a shape shown in, for example, FIG. 2 is detachably attached to the outside of rotary shaft 13. Here, the shape of rotor 15 is not limited to the shape shown in FIG. 2.

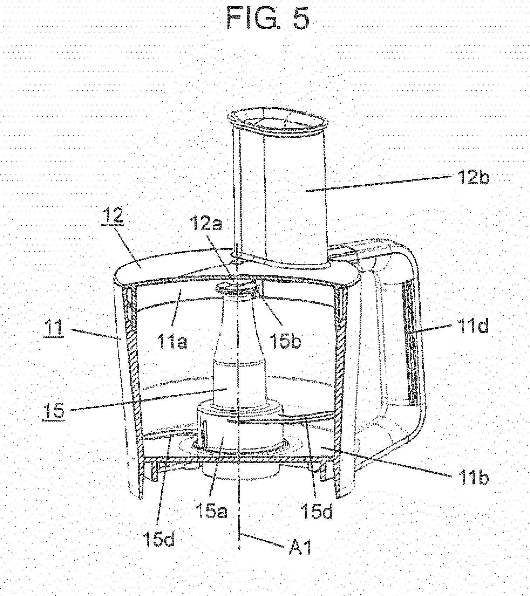

Next, the configuration of rotor 15 will be explained with reference to FIG. 4 and FIG. 5.

FIG. 4 is a cross-sectional view showing the schematic configuration of rotor 15 and FIG. 5 is a perspective view showing rotor 15 fixed to container unit 1, as viewed partly in perspective.

As shown in FIG. 4 and FIG. 5, rotor 15 is formed into a substantially cylindrical shape, and is disposed so as to encompass rotary shaft 13 and cylindrical part 11c. Rotor 15 is formed such that its diameter becomes substantially stepwise smaller from lower end 15a to upper end 15b.

Upper end 15b of rotor 15 is formed into a disk-like shape so as to extend outward along the inner surface of lid 12 disposed at cooking container 11. Consequently, upper end 15b suppresses the intrusion of food to be cooked into rotor 15 during cooking. Moreover, upper end 15b facilitates handling of rotor 15 by hand fingers of a user.

Rotor 15 has, at its inner surface, a plurality of claws 15c formed at equal intervals. At this time, the plurality of claws 15c are located at positions at which they engage with the plurality of claws 13d of rotary shaft 13. Therefore, rotor 15 is disposed at rotary shaft 13, thus achieving the integral rotation of rotor 15 with rotary shaft 13.

Lower end 15a of rotor 15 is formed into a cylindrical shape having a greater diameter than that of upper end 15b. One or more blades 15d are fixed to the outer peripheral surface of lower end 15a. Here, in the present exemplary embodiment, for example, two blades 15d are fixed at the outer peripheral surface of lower end 15a of rotor 15. Two blades 15d are separated from each other at a predetermined angle (e.g., 180°C) in a circumferential direction and are disposed at different heights, as shown in FIG. 5. When each of blades 15d is rotated, food to be cooked, which is contained inside of cooking container 11, is cooked by stirring, kneading, or cutting.

As shown in FIG. 1, cooking container 11 is provided with handle 11d at the side surface of cooking container 11. Furthermore, cooking container 11 is disposed such that lid 12 engages with upper opening 11a in a disengageable manner. Lid 12 is provided with charging cylinder 12b at a position shifted from bearing 12a. Charging cylinder 12b defines a charging port through which food to be cooked is charged into cooking container 11.

In addition, as shown in FIG. 2, motor 21 exemplifying a drive source is incorporated inside of device body 2. Motor 21 applies drive force to rotary shaft 13, and then, rotates it. Specifically, motor 21 applies drive force to output shaft 21a.

Output shaft 21a penetrates an upper portion inside of device body 2 and extends in exposure to the outside from device body 2. The tip of output shaft 21a is secured to drive-side connector 22.

Drive-side connector 22 receives the drive force via output shaft 21a of motor 21. In this manner, drive-side connector 22 is rotated integrally with output shaft 21a on rotational axis A1.

Drive-side connector 22 is configured such that it engages with driven-side connector 14 of cooking container 11 in fixing cooking container 11 to device body 2. At this time, when motor 21 is driven in a state in which drive-side connector 22 and driven-side connector 14 engage with each other, drive-side connector 22 fixed to output shaft 21a is rotated. Then, driven-side connector 14 engaging with drive-side connector 22 is rotated, thus rotating rotary shaft 13 fixed to driven-side connector 14. In this manner, rotor 15 is rotated via claws 15c engaging with claws 13d of rotary shaft 13. As a consequence, blades 15d secured to rotor 15 are rotated, thus cooking food to be cooked.

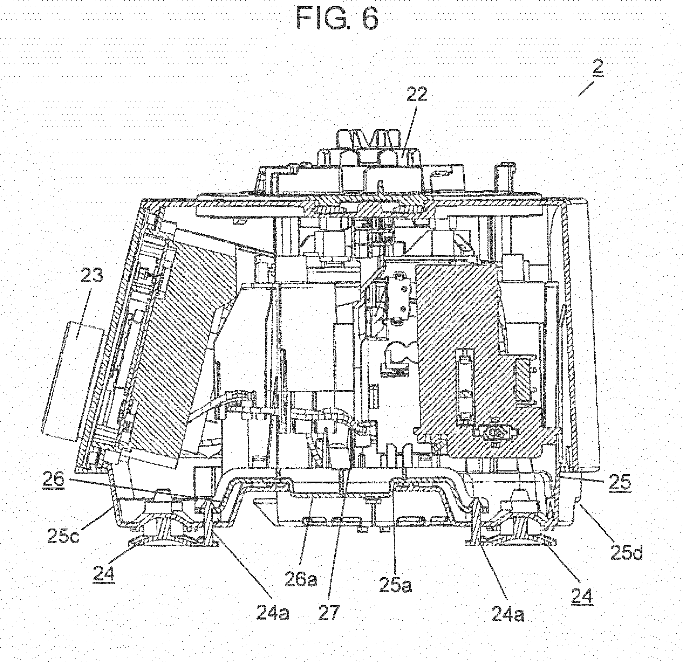

Subsequently, a description will be given of the configuration of device body 2 in the rotary cooking device in the present exemplary embodiment with reference to FIG. 1 and FIG. 6.

FIG. 6 is a cross-sectional view showing device body 2.

As shown in FIG. 1 and FIG. 6, device body 2 includes operational part 23 at the front of device body 2 (corresponding to the left side in FIG. 6). Operational part 23 is adapted to switch ON/OFF of motor 21 or the drive force of motor 21 by operation by a user.

Device body 2 is provided, at bottom plate 25 constituting a bottom, with a plurality of suckers 24 formed into, for example, a domed shape. The plurality of suckers 24 serve as legs for supporting device body 2, and is made of, for example, rubber.

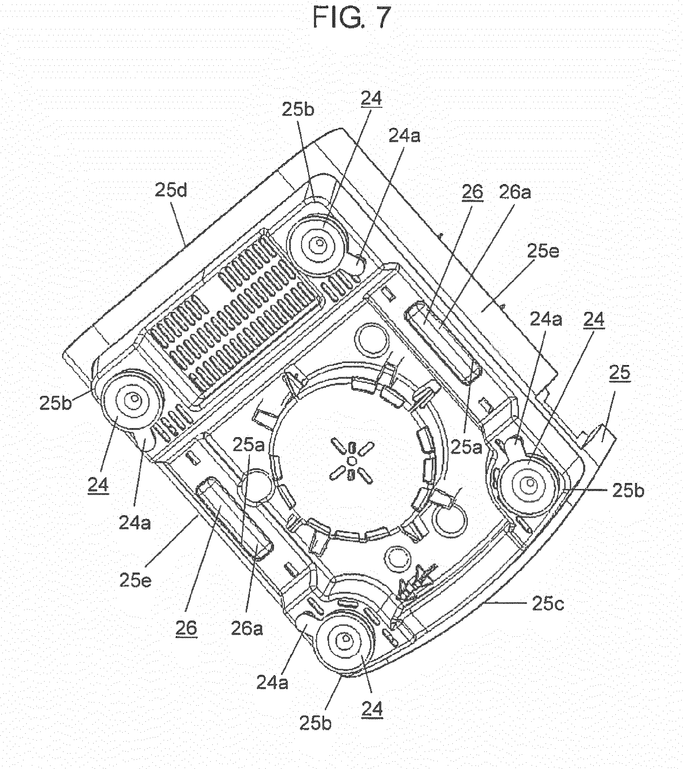

Here, explanation will be made below on bottom plate 25 with reference to FIG. 6 and FIG. 7. Note that bottom plate 25 exemplifies a part at which hand fingers of a user are placed for lifting device body 2.

FIG. 7 is a perspective view showing bottom plate 25, as slantwise viewed from the bottom (on the side of suckers 24).

As shown in FIG. 7, bottom plate 25 is formed into a substantially rectangular shape (including a rectangular shape) having, for example, front portion 25c, rear portion 25d, and right and left side portions 25e, as viewed on a plane. The above-described plurality of suckers 24 are arranged near, for example, four corners 25b of bottom plate 25. In other words, in the present exemplary embodiment, four suckers 24 are arranged on bottom plate 25 in order to support device body 2.

As shown in FIG. 6, each of suckers 24 has projection 24a projecting upward (i.e., the inside of device body 2) in the vicinity of the outer peripheral portion.

Projections 24a of two suckers 24 located on one of side portions 25e of bottom plate 25 are connected to each other via suction releasing lever 26. In the same manner, projections 24a of two suckers 24 located on the other side portion 25e of bottom plate 25 are connected to each other via another suction releasing lever 26. That is to say, two suction releasing levers 26 are provided in the present exemplary embodiment.

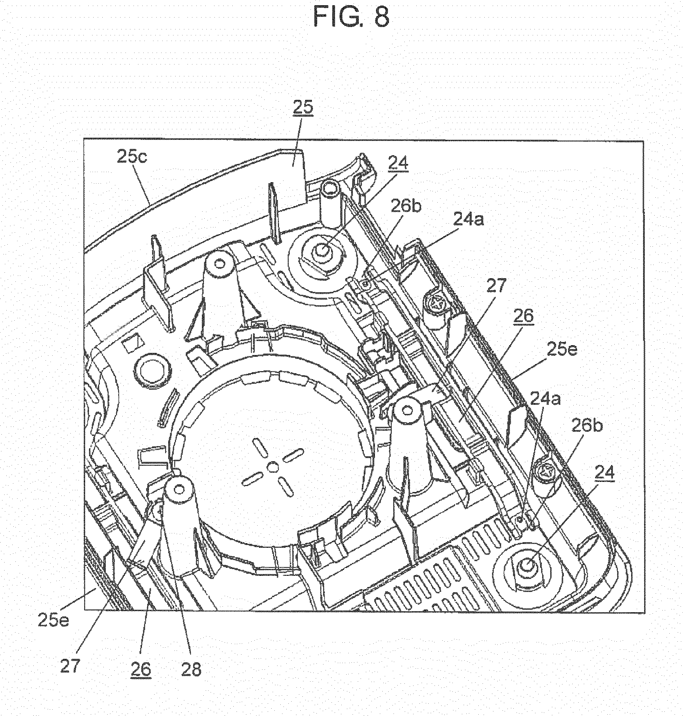

A description will be given below of the configuration of suction releasing lever 26 with reference to FIG. 8.

FIG. 8 is a perspective view showing bottom plate 25, as obliquely viewed from the top.

As shown in FIG. 8, two suction releasing levers 26 are provided so as to extend along right and left side portions 25e of bottom plate 25, respectively.

Incidentally, suction releasing lever 26 is formed by bending, in a stepwise manner, an elongated plate member made of, for example, a resin toward both ends in a longitudinal direction a plurality of times.

Suction releasing lever 26 has cutouts 26b at both ends of suction releasing lever 26. Projections 24a of two suckers 24 connected to each other are inserted into cutouts 26b, respectively. In this manner, suction releasing lever 26 is designed to connect projections 24a of two suckers 24 to each other.

Each of two suction releasing levers 26 is urged downward (on the side of sucker 24) by a resilient member such as plate spring 27. Specifically, each of suction releasing levers 26 is urged against the upper surface of bottom plate 25 (i.e., an inner surface facing up during installation) via plate spring 27. Plate spring 27 is fixed to bottom plate 25 via tightening member 28 such as a screw.

As shown in FIG. 6 and FIG. 7, bottom plate 25 has through hole 25a penetrating bottom plate 25 in an up-down direction.

Suction releasing lever 26 has projection 26a near the center of suction releasing lever 26. Projection 26a is provided so as to project downward (i.e., on the side of sucker 24) from through hole 25a of bottom plate 25 by the resiliency of plate spring 27.

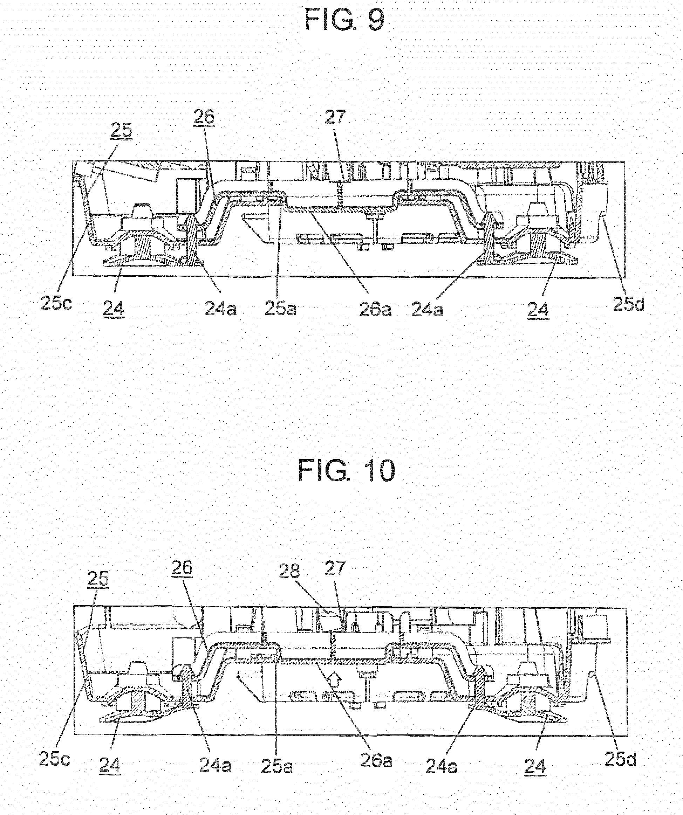

The operation and function of suction releasing lever 26 will be explained below with reference to FIG. 9 and FIG. 10.

FIG. 9 is a cross-sectional view showing the state of suction releasing lever 26 in a state in which device body 2 is sucked and fixed to a cooking table. FIG. 10 is a cross-sectional view showing the state of suction releasing lever 26 for releasing the suction of sucker 24 when device body 2 is lifted from the cooking table.

As shown in FIG. 9 and FIG. 10, first, a user places his or her hand fingers at projection 26a of suction releasing lever 26 projecting from through hole 25a of bottom plat 25, and then, lifts device body 2. In this manner, projection 26a is lifted upward (i.e., inward of device body 2) against the resiliency of plate spring 27. At this time, projection 26a of suction releasing lever 26 is moved upward under the guidance of the inner circumferential surface of through hole 25a of bottom plate 25. Projections 24a of two suckers 24, which have been inserted into cutouts 26b of suction releasing lever 26, are moved upward according to the movement of projection 26a. As a consequence, as shown in FIG. 10, a part of the outer periphery of sucker 24 is lifted, thereby releasing the suction by sucker 24. The rotary cooking device in the present exemplary embodiment is provided with suction releasing levers 26 at both side portions 25e of bottom plate 25, respectively. Therefore, when the user lifts two suction releasing levers 26 with his or her hand fingers of both hands, the suction by four suckers 24 for sucking and holding the rotary cooking device is released. As a consequence, the user can easily lift the rotary cooking device from the cooking table.

With the rotary cooking device in the present exemplary embodiment, when suction releasing levers 26 are lifted upward, projections 24a of the plurality of suckers 24 are moved upward. In this manner, the suction by the plurality of suckers 24 is released at the same time. Specifically, in association with the upward lifting operation for projections 26a of suction releasing levers 26, projections 24a of the plurality of suckers 24 are moved upward. In this manner, the suction by the plurality of suckers 24 is released. As a result, it is unnecessary to lift four suckers 24 one by one to release the suction. Consequently, the user can easily lift the rotary cooking device by a simple operation so as to move it.

Moreover, with the rotary cooking device in the present exemplary embodiment, suction releasing levers 26 are disposed at both side portions 25e at the bottom of bottom plate 25 corresponding to portions at which hand fingers are placed in lifting device body 2. Consequently, projections 26a of suction releasing levers 26 are lifted upward by utilizing force for lifting device body 2 by the user. As a consequence, the user does not need to particularly pay attention to the release of the suction by suckers 24. Consequently, the suction of the plurality of suckers 24 can be easily released according to the operation for lifting device body 2 by the user.

Note that although the bottom of side portion 25e of bottom plate 25 in device body 2 exemplifies a portion at which the hand fingers are placed in lifting device body 2 in the above-described exemplary embodiment, the present disclosure is not limited to this. For example, a holder such as a groove or a grip may be disposed at side portion 25e of device body 2, so that device body 2 is lifted by placing hand fingers at the holder. In this case, a part of suction releasing lever 26 may be disposed at the holder, so that suction releasing lever 26 is lifted by utilizing a holder lifting force. As a consequence, the user can release the suction by the plurality of suckers 24 in lifting device body 2 without paying any particular attention.

Moreover, the rotary cooking device in the present exemplary embodiment is configured such that when suction releasing lever 26 is lifted, projection 26a of suction releasing lever 26 is moved under the guidance of the inner circumferential surface of through hole 25a of bottom plate 25. With this configuration, suction releasing lever 26 is lifted right upward without any inclination. As a consequence, the suction of the plurality of suckers 24 can be released at the same time. Thus, the rotary cooking device can be lifted with more ease.

Incidentally, the present disclosure is not limited to the above-described exemplary embodiment, and therefore, various other exemplary embodiments can be carried out.

For example, although the configuration in which the suction of two suckers 24 is released by single suction releasing lever 26 at the same time has been explained in the above-described exemplary embodiment, the present disclosure is not limited to this. For example, single suction releasing lever 26 may be connected to a part (e.g., projection 24a) of each of three or more suckers 24, and the suction of three or more suckers 24 may be released at the same time. This enhances operability such as releasing operation by one hand.

Alternatively, although the configuration in which two suction releasing levers 26 are provided has been explained in the above-described exemplary embodiment, the present disclosure is not limited to this. For example, the number of suction releasing levers 26 may be one or three or more. That is to say, the plurality of suction releasing levers 26 may be operated by fingers, respectively. This enables suction releasing levers 26 to be arranged in the vicinity of suckers, thereby reducing the size of the configuration of each of suction releasing levers 26.

Or, although the configuration in which all of the legs of device body 2 have their own suckers 24 has been explained in the above-described exemplary embodiment, the present disclosure is not limited to this. For example, some of the legs of device body 2 may not be suckers 24 and may be rubber legs without any sucker. This simplifies component parts.

Alternatively, although suction releasing lever 26 is formed by, for example, bending a plate member a plurality of times in a stepwise manner in the above-described exemplary embodiment, the present disclosure is not limited to this. For example, suction releasing lever 26 may be formed of, for example, a straight rod-like member. This simplifies the configuration of each of component parts so as to reduce cost and enhance productivity.

Or, although the material of suction releasing lever 26 has not been particularly referred to in the above-described exemplary embodiment, suction releasing lever 26 may be made of a metallic material such as stainless steel or a resin material such as polypropylene.

Alternatively, although the explanation has been made on the configuration in which suction releasing lever 26 is connected to the respective projections 24a of two suckers 24 and projections 24a are lifted so as to release the suction of two suckers 24, the present disclosure is not limited to this.

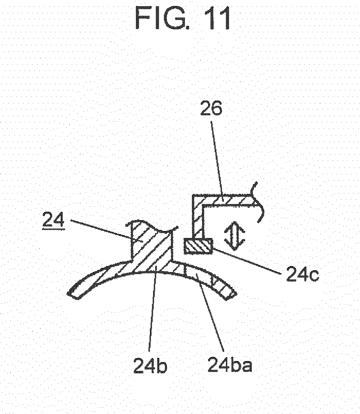

For example, the suction of suckers may be released by a configuration including suction releasing levers 26 and suckers 24, as described below with reference to FIG. 11.

FIG. 11 is a cross-sectional view showing essential parts in a modification of a suction releasing lever for releasing the suction of a sucker and the sucker.

Specifically, as shown in FIG. 11, sucker 24 includes sucker body 24b having through hole 24ba and plug 24c. Plug 24c of sucker 24 is connected to the tip of suction releasing lever 26. Plug 24c is pressed against sucker body 24b by suction releasing lever 26 so as to close through hole 24ba during sucking, and then, is press-fitted into through hole 24ba. In this case, it is preferable that the size of plug 24c should be a slightly greater than that of through hole 24ba. Here, in the case of the configuration in which through hole 24ba is covered with plug 24c, plug 24c is simply required to be greater than through hole 24ba.

In this case, as shown in FIG. 11, when suction releasing lever 26 is lifted, plug 24c of sucker 24 connected to the tip of suction releasing lever 26 is lifted. Then, through hole 24ba of sucker 24 is opened. In this manner, air is introduced into sucker 24 through opened through hole 24ba. As a consequence, the suction of a plurality of suckers 24 can be released at the same time, so that a rotary cooking device can be easily lifted.

As described above, the rotary cooking device according to the present disclosure includes: a device body; a cooking container that is fixed to the device body and is configured to contain food to be cooked; a rotor that is rotated inside of the cooking container and cooks the food to be cooked, which is contained inside of the cooking container; and a drive source that applies drive force to the rotor. Moreover, the rotary cooking device includes: a plurality of suckers that are attached to a bottom of the device body and serve as legs for supporting the device body by suction; and a suction releasing lever partly connects the plurality of suckers to each other. The suction releasing lever uplifts and moves a part of each of the plurality of suckers so as to release the suction of each of the plurality of suckers.

Moreover, the rotary cooking device according to the present disclosure may be configured such that the suction releasing lever is located at a portion at which hand finger is placed when the device body is lifted.

Additionally, in the rotary cooking device according to the present disclosure, the suction releasing lever may be disposed in an up-down direction with respect to the bottom of the device body in a relatively movable manner.

In addition, in the rotary cooking device according to the present disclosure, the bottom of the device body may be formed into a substantially rectangular shape, as viewed on a plane, and the suction releasing lever may extend along the side of the bottom of the device body.

Furthermore, in the rotary cooking device according to the present disclosure, the plurality of suckers may be arranged at least near four corners of the bottom of the device body, and two of the suction releasing lever may be disposed so as to extend along both sides of the bottom of the device body.

Moreover, in the rotary cooking device according to the present disclosure, the bottom of the device body may have a through hole penetrating the bottom in an up-down direction, and the suction releasing lever may be provided with a projection projecting downward from the through hole. The projection may be configured such that an upward movement of the projection is guided by an inner circumferential surface of the through hole when the projection is lifted upward, and a part of each of the plurality of suckers is moved upward so as to release the suction of the plurality of suckers.

Additionally, in the rotary cooking device according to the present disclosure, each of the plurality of suckers may include a sucker body having a through hole and a plug for closing the through hole, and the suction releasing lever may be provided so as to be connected to the plug for each of the plurality of suckers.

In addition, in the rotary cooking device according to the present disclosure, the suction releasing lever may be urged against the bottom of the device body by a resilient member.

## Claims

1. A rotary cooking device comprising:
a device body (2);
a cooking container (11) that is fixed to the device body (2) and is configured to contain food to be cooked;
a rotor (15) that is rotated inside of the cooking container (11) and cooks the food to be cooked, which is contained inside of the cooking container (11);
a drive source (21) that applies drive force to the rotor (15),
**characterized in that**
a plurality of suckers (24) that are attached to a bottom of the device body (2) and serve as legs for supporting the device body (2) by suction; and
a suction releasing lever (26) connects the plurality of suckers (24) to each other,
wherein the suction releasing lever (26) uplifts and moves a part of each of the plurality of suckers (24) so as to release the suction of each of the plurality of suckers (24).

2. The rotary cooking device according to claim 1, wherein the suction releasing lever (26) is located at a portion at which hand finger is placed when the device body (2) is lifted.

3. The rotary cooking device according to claim 1, wherein the suction releasing lever (26) is disposed in an up-down direction with respect to the bottom of the device body (2) in a relatively movable manner.

4. The rotary cooking device according to claim 1, wherein the bottom of the device body (2) is formed into a substantially rectangular shape, as viewed on a plane, and the suction releasing lever (26) extends along the side of the bottom of the device body (2).

5. The rotary cooking device according to claim 4, wherein:
the plurality of suckers (24) are arranged at least near four corners (25b) of the bottom of the device body (2); and
two of the suction releasing lever (26) is disposed so as to extend along both sides of the bottom of the device body (2).

6. The rotary cooking device according to claim 1, wherein:
the bottom of the device body (2) has a through hole (25a) penetrating in an up-down direction;
the suction releasing lever (26) is provided with a projection (26a) projecting downward from the through hole (25a); and
the projection (26a) is configured such that an upward movement of the projection (26a) is guided by an inner circumferential surface of the through hole (25a) when the projection (26a) is lifted upward, and a part of each of the plurality of suckers (24) is moved upward so as to release the suction of the plurality of suckers (24).

7. The rotary cooking device according to claim 1, wherein:
each of the plurality of suckers (24) includes a sucker body (24b) having a through hole (24ba) and a plug (24c) for closing the through hole (24ba); and
the suction releasing lever (26) is provided so as to be connected to the plug (24c) for each of the plurality of suckers (24).

8. The rotary cooking device according to claim 1, wherein the suction releasing lever (26) is urged against the bottom of the device body (2) by a resilient member (27).

## Patentansprüche

1. Rotierende Kochvorrichtung, die umfasst:
einen Vorrichtungs-Körper (2);
einen Kochbehälter (11), der an dem Vorrichtungs-Körper (2) befestigt und so eingerichtet ist, dass er zu kochendes Lebensmittel aufnimmt;
einen Rotor (15), der im Inneren des Kochbehälters (11) gedreht wird und das zu kochende Lebensmittel kocht, das im Inneren des Kochbehälters (11) aufgenommen ist;
eine Antriebsquelle (21), die Antriebskraft auf den Rotor (15) ausübt,
**dadurch gekennzeichnet, dass**
eine Vielzahl von Saugnäpfen (24), die an einem Boden des Vorrichtungs-Körpers (2) angebracht sind und als Füße zum Halten des Vorrichtungs-Körpers (2) mittels Saugkraft dienen; sowie
ein Hebel (26) zum Aufheben von Saugkraft die Vielzahl der Saugnäpfe (24) miteinander verbindet ,
wobei der Hebel (26) zum Aufheben von Saugkraft einen Teil jedes der Vielzahl von Saugnäpfen (24) so anhebt und bewegt, dass die Saugkraft jedes der Vielzahl von Saugnäpfen (24) aufgehoben wird.

2. Rotierende Kochvorrichtung nach Anspruch 1, wobei der Hebel (26) zum Aufheben von Saugkraft an einem Abschnitt angeordnet ist, an dem der Finger einer Hand positioniert wird, wenn der Vorrichtungs-Körper (2) angehoben wird.

3. Rotierende Kochvorrichtung nach Anspruch 1, wobei der Hebel (26) zum Aufheben von Saugkraft so angeordnet ist, dass er in einer vertikalen Richtung in Bezug auf den Boden des Vorrichtungs-Körpers (2) relativ bewegt werden kann.

4. Rotierende Kochvorrichtung nach Anspruch 1, wobei der Boden des Vorrichtungs-Körpers (2), in einer Ebene gesehen, in einer im Wesentlichen rechteckigen Form ausgebildet ist und der Hebel (26) zum Aufheben von Saugkraft sich entlang der Seite des Bodens des Vorrichtungs-Körpers (2) erstreckt.

5. Rotierende Kochvorrichtung nach Anspruch 4, wobei:
die Vielzahl von Saugnäpfen (24) wenigstens in der Nähe von vier Ecken (25b) des Bodens des Vorrichtungs-Körpers (2) angeordnet sind; und
zwei der Hebel (26) zum Aufheben von Saugkraft so angeordnet sind, dass sie sich entlang beider Seiten des Bodens des Vorrichtungs-Körpers (2) erstrecken.

6. Rotierende Kochvorrichtung nach Anspruch 1, wobei:
der Boden des Vorrichtungs-Körpers (2) ein Durchgangsloch (25a) aufweist, das sich in einer vertikalen Richtung erstreckt;
der Hebel (26) zum Aufheben von Saugkraft mit einem Vorsprung (26a) versehen ist, der von dem Durchgangsloch (25a) nach unten vorsteht; und
der Vorsprung (26a) so ausgeführt ist, dass eine nach oben gerichtete Bewegung des Vorsprungs (26a) durch eine Innenumfangsfläche des Durchgangslochs (25a) geführt wird, wenn der Vorsprung (26a) nach oben angehoben wird, und ein Teil jedes der Vielzahl von Saugnäpfen (24) nach oben bewegt wird, um die Saugkraft der Vielzahl von Saugnäpfen (24) aufzuheben.

7. Rotierende Kochvorrichtung nach Anspruch 1, wobei:
jeder der Vielzahl von Saugnäpfen (24) einen Saugnapf-Körper (24b) mit einem Durchgangsloch (24ba) sowie einen Stopfen (24c) zum Verschließen des Durchgangslochs (24ba) enthält; und
der Hebel (26) zum Aufheben von Saugkraft so angeordnet ist, dass er mit dem Stopfen (24c) für jeden der Vielzahl von Saugnäpfen (24) verbunden ist.

8. Rotierende Kochvorrichtung nach Anspruch 1, wobei der Hebel (26) zum Aufheben von Saugkraft durch ein elastisches Element (27) an den Boden des Vorrichtungs-Körpers (2) gedrückt wird.

## Revendications

1. Dispositif rotatif de cuisson comprenant :
un corps de dispositif (2) ;
un récipient de cuisson (11) qui est fixé au corps de dispositif (2) et qui est configuré pour contenir l'aliment à cuire ;
un rotor (15) qui se trouve en rotation à l'intérieur du récipient de cuisson (11) et qui cuit l'aliment à cuire, qui est contenu à l'intérieur du récipient de cuisson (11) ;
une source d'entraînement (21) qui applique la force d'entraînement au rotor (15),
**caractérisé en ce que**
une pluralité de ventouses (24) qui sont fixées à un fond du corps de dispositif (2) et servent de pattes pour supporter le corps de dispositif (2) par succion ; et
un levier de relâchement de succion (26) relie la pluralité des ventouses (24) l'une à l'autre,
où le levier de relâchement de succion (26) soulève et déplace une partie de chacune de la pluralité des ventouses (24) afin de relâcher la succion de chacune de la pluralité des ventouses (24).

2. Dispositif rotatif de cuisson selon la revendication 1, dans lequel le levier de relâchement de succion (26) est localisé à une partie au niveau de laquelle le doigt de main est placé lorsque le corps de dispositif (2) est levé.

3. Dispositif rotatif de cuisson selon la revendication 1, dans lequel le levier de relâchement de succion (26) est disposé dans un sens haut-bas par rapport au fond du corps de dispositif (2) d'une manière relativement mobile.

4. Dispositif rotatif de cuisson selon la revendication 1, dans lequel le fond du corps de dispositif (2) est formé en une forme sensiblement rectangulaire, telle que visualisée sur un plan, et le levier de relâchement de succion (26) s'étend le long du côté du fond du corps de dispositif (2).

5. Dispositif rotatif de cuisson selon la revendication 4, dans lequel :
la pluralité des ventouses (24) sont disposées au moins près des quatre coins (25b) du fond du corps de dispositif (2) ; et
deux du levier de relâchement de succion (26) est disposé afin de s'étendre le long des deux côtés du fond du corps de dispositif (2).

6. Dispositif rotatif de cuisson selon la revendication 1, dans lequel :
le fond du corps de dispositif (2) présente un trou traversant (25a) pénétrant dans un sens haut-bas ;
le levier de relâchement de succion (26) étant muni d'une projection (26a) se projetant vers le bas depuis le trou traversant (25a) ; et
la projection (26a) étant configurée de sorte qu'un mouvement vers le haut de la projection (26a) est guidé par une surface circonférentielle interne du trou traversant (25a) lorsque la projection (26a) est levée vers le haut, et une partie de chacune de la pluralité des ventouses (24) est déplacée vers le haut afin de relâcher la succion de la pluralité des ventouses (24).

7. Dispositif rotatif de cuisson selon la revendication 1, dans lequel :
chacune de la pluralité des ventouses (24) comprend un corps de ventouse (24b) ayant un trou traversant (24ba) et un bouchon (24c) pour fermer le trou traversant (24ba) ; et
le levier de relâchement de succion (26) est prévu afin d'être relié au bouchon (24c) pour chacune de la pluralité des ventouses (24).

8. Dispositif rotatif de cuisson selon la revendication 1, dans lequel le levier de relâchement de succion (26) est poussé contre le fond du corps de dispositif (2) par un élément résilient (27).
